# EUROPEAN PATENT APPLICATION

(11) **EP 3 001 687 A1**
(43) Date of publication of application: **30.03.2016**
(21) Application number: 15185524.4
(22) Date of filing: 16.09.2015
(51) Int. Cl.: H04N 21/2343, H04N 21/236

(54) **SIGNAL RECEIVING APPARATUS AND METHOD OF CONTROLLING THE SAME**

(30) Priority: 24.09.2014 KR 20140127948
(71) Applicant: Samsung Electronics Co., Ltd., Gyeonggi-do 16677 (KR)
(72) Inventor: PARK, Chan Sub, Incheon (KR); JUNG, Choon Sik, Gyeonggi-do (KR); CHOI, Yun Ho, Seoul (KR); MIN, Suk In, Gyeonggi-do (KR)
(74) Representative: Walaski, Jan Filip

(57) **Abstract**

A signal receiving apparatus includes a receiver configured to receive a first format data and a second format data, to convert the second format data to the first format, and to transmit the first format data and the converted second format data, and a decoder configured to receive the first format data and the converted second format data transmitted from the receiver and to restore one of an image data and an acoustic data from the first format data and the converted second format data.

## Description

The present invention relates to a signal receiving apparatus and a method of controlling the same, and more particularly, to a signal receiving apparatus for providing compatibility with second generation digital broadcasting signals and a method of controlling the apparatus.

A Moving Picture Experts Group ₂-Transport Stream (MPEG₂-TS) packet defined to transmit audio and video data in a first generation digital broadcasting system is formed of a fixed length of 188 bytes including a header of 4 bytes and an adaptation field/payload of 184 bytes.

As a result thereof, receivers including a television, a set-top box, etc., which receive first generation digital broadcasting signals, are allowed to form an optimal interface for receiving a Transport Stream (TS) packet of 188 bytes.

On the other hand, a transmitting source of encoded data transmits a data frame formed of packets having various formats to a receiver, to transmit audio and video broadcasting data in a second generation digital broadcasting system. Herein, formats of a packet which is transmittable by the transmitter of the second generation digital broadcasting system are TS, Generic Stream Encapsulation (GSE), Generic Continuous Stream (GCS), and Generic Fixed Packetized Stream (GFPS).

Particularly, among formats of packets transmittable from the transmitter of the second generation digital broadcasting system, TS packets, as described above, have a fixed size of 188 bytes, however, but GSE packets have a variable size.

Accordingly, a first generation digital broadcasting signal receiver with an optimal interface for receiving TS packets of 188 bytes suffer difficulties in receiving packets having various formats included in second generation digital broadcasting signals.

Therefore, aspects of the exemplary embodiments provide a signal receiving apparatus able to transmit transmission data packets having various formats between a receiver and a decoder, and a method of controlling the signal receiving apparatus.

Exemplary embodiments overcome the above disadvantages and other disadvantages not described above. Also, an exemplary embodiment is not required to overcome the disadvantages described above, and an exemplary embodiment may not overcome any of the problems described above.

Additional aspects of the exemplary embodiments will be set forth in part in the description which follows and, in part, will be obvious from the description, or may be learned by practice of the embodiments.

In accordance with one aspect of the disclosure, a signal receiving apparatus includes a receiver configured to receive a first format data and a second format data, to convert the second format data to the first format, and to transmit the first format data and the converted second format data, and a decoder configured to receive the first format data and the converted second format data transmitted from the receiver and to restore one of an image data and an acoustic data from the first format data and the converted second format data.

According to another exemplary embodiment, the decoder is further configured to restore original data of the converted second format data from the received converted second format data and to restore one of the image data and acoustic data from the second format data.

According to another exemplary embodiment, the receiver is further configured to transmit a synchronization signal, which indicates a beginning of transmission of the first format data or the converted second format data, to the decoder.

According to another exemplary embodiment, the decoder is further configured to restore the second format data based on the synchronization signal.

According to another exemplary embodiment, the receiver is further configured to transmit a data transmission signal which indicates the transmission of the first data or the converted second format data to the decoder.

According to another exemplary embodiment, the decoder is further configured to restore the second format data from the received converted second format data while the data transmission signal is being received.

According to another exemplary embodiment, the first format data has a predetermined size and the second format data has a variable size.

According to another exemplary embodiment, the first format data has a size of 188 bytes.

According to another exemplary embodiment, the first format data is a transport stream (TS) packet and the second format data is at least one of a Generic Stream Encapsulation (GSE) packet, a Generic Continuous Stream (GCS) packet, and a Generic Fixed Packetized Stream (GFPS) packet.

In accordance with another aspect of the disclosure, a method of controlling a signal receiving apparatus comprising a receiver and a decoder includes receiving, by the receiver, a first format data and a second format data, converting, by the receiver, the second format data into the first format when the second format data is received, transmitting by the receiver, the first format data and the converted second format data to the decoder, receiving, by the decoder, the first format data and the converted second format data transmitted by the receiver and restoring, by the decoder, the second format data from the received converted second format data.

According to another exemplary embodiment, the method further includes restoring, by the decoder, one of an image data and an acoustic data from the restored second format data.

According to another exemplary embodiment, the method further includes transmitting, by the receiver, a synchronization signal which indicates a beginning of the transmission of the first format data or the converted second format data to the decoder.

According to another exemplary embodiment, the restoring of the second format data is based on the synchronization signal.

According to another exemplary embodiment, the method further includes transmitting, by the receiver, a data transmission signal which indicates the transmission of the first format data or the converted second format data to the decoder.

According to another exemplary embodiment, the restoring of the second format data comprises restoring the second format data based on the converted second format data received while the data transmission signal is being received.

According to another exemplary embodiment, the first format data has a predetermined size and the second format data has a variable size.

According to another exemplary embodiment, the first format data is a transport stream (TS) packet and the second format data is at least one of a Generic Stream Encapsulation (GSE) packet, a Generic Continuous Stream (GCS) packet, and a Generic Fixed Packetized Stream (GFPS) packet.

In accordance with another aspect of the disclosure, a method of controlling a signal receiving apparatus comprising a receiver, and a decoder includes receiving, by the receiver, an encoded data, determining, by the receiver, that the encoded data does not correspond to data of a predetermined size, converting, by the receiver, the encoded data into encoded data of the predetermined size, transmitting, by the receiver, encoded data of the predetermined size to the decoder, and restoring, by the decoder, original data from the encoded data of the predetermined size.

According to another exemplary embodiment, the encoded data and the restored original data are of the same size.

These and/or other aspects of the embodiments will become apparent and more readily appreciated from the following description of the embodiments, taken in conjunction with the accompanying drawings, in which:
FIG. 1 is a view of a digital broadcasting system including a signal receiving apparatus, according to one embodiment of the disclosure;
FIG. 2 is a view illustrating an example of an encoder shown in FIG. 1;
FIGS. 3A and 3B are views illustrating examples of a packet generated by the encoder of FIG. 2;
FIG. 4 is a view illustrating an example of a transmitter shown in FIG. 1;
FIG. 5 illustrates a signal generated by the transmitter of FIG. 4;
FIG. 6 is a configuration view of the signal receiving apparatus, according to an exemplary embodiment;
FIG. 7 is a view illustrating an example of a signal receiving unit included in the signal receiving apparatus, according to an exemplary embodiment;
FIG. 8 is a configuration view of a receiver included in the signal receiving apparatus, according to an exemplary embodiment;
FIG. 9 is a configuration view of a decoder included in the signal receiving apparatus, according to an exemplary embodiment;
FIG. 10 illustrates an example in which the receiver included in the signal receiving apparatus transmits a transmission data packet, according to an exemplary embodiment;
FIG. 11 is a view illustrating an example in which the decoder included in the signal receiving apparatus restores the received transmission data packet, according to an exemplary embodiment;
FIG. 12 illustrates another example in which the receiver included in the signal receiving apparatus transmits the transmission data packet, according to an exemplary embodiment;
FIG. 13 is a view illustrating another example in which the decoder included in the signal receiving apparatus restores the received transmission data packet, according to an exemplary embodiment;
FIG. 14 illustrates another example in which the receiver included in the signal receiving apparatus transmits the transmission data packet, according to an exemplary embodiment;
FIG. 15 is a view illustrating another example in which the decoder included in the signal receiving apparatus restores the received transmission data packet, according to an exemplary embodiment; and
FIG. 16 is a flowchart illustrating an example of operations of the receiver and decoder included in the signal receiving apparatus, according to an exemplary embodiment.

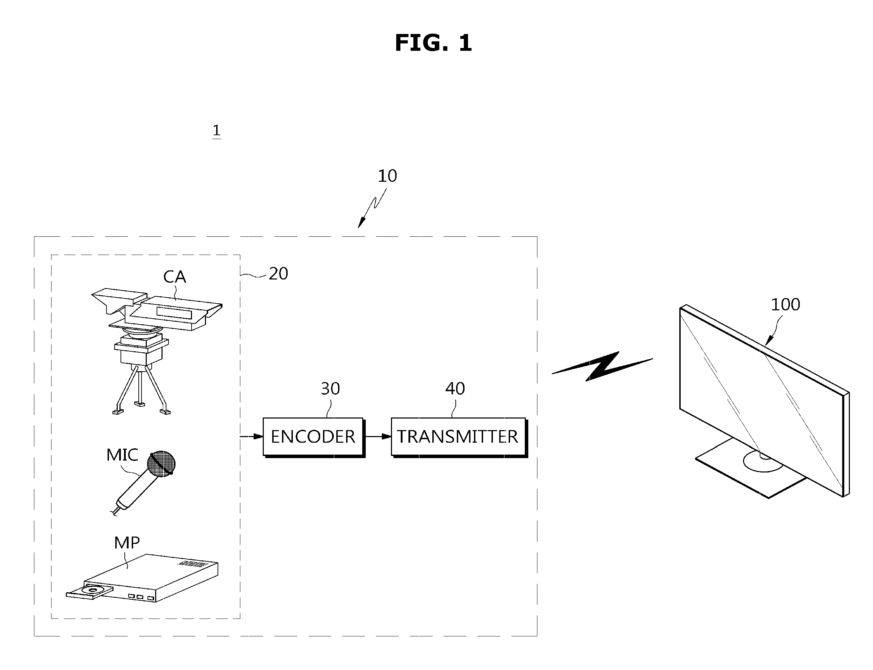

Referring to FIGS. 1 to 5, the digital broadcasting system 1 includes a signal transmitting apparatus 10 which transmits broadcasting signals and the signal receiving apparatus 100 which receives the broadcasting signals transmitted by the signal transmitting apparatus 10. Also, the digital broadcasting system 1 may further include a signal relay apparatus which receives signals transmitted by the signal transmitting apparatus 10 and retransmits the signals to the signal receiving apparatus 100.

The signal transmitting apparatus 10 will be described.

A configuration of the signal transmitting apparatus 10, being described herein, is merely an example of a transmitting apparatus which converts/modulates digital broadcasting content and transmits the converted/modulated digital broadcasting content to the signal receiving apparatus 100, and the signal transmitting apparatus 10 is not limited thereto.

The signal transmitting apparatus 10 includes a content source 20 which generates digital broadcasting content, the encoder 30 which encodes the digital broadcasting content into a particular format, and the transmitter 40 which transmits the encoded digital broadcasting content through radio waves, light etc.

The content source 20 may include various media devices capable of generating content including images or sounds, such as a camera CA which converts an optical signal into an electric signal, a microphone MIC which converts an acoustic signal into an electric signal, and a media player MP which plays images or sounds stored in a storage medium.

The content source 20, as described above, converts optical signals and acoustic signals into image data and acoustic data, respectively, and provides the encoder 30 with the image data and acoustic data.

The encoder 30 receives digital broadcasting content such as image data and acoustic data provided by the content source 20, encodes the received image data and acoustic data into a transmission data packet D1, and outputs the transmission data packet D1.

In detail, the encoder 30 may multiplex data which relates to image data, acoustic data, and digital broadcasting content (hereinafter, referred to as "content-related data"). Herein, the content-related data may include broadcast schedules of digital broadcasting content, information on transmitted digital broadcasting content, and information related to the signal transmitting apparatus 10, which transmits digital broadcasting content.

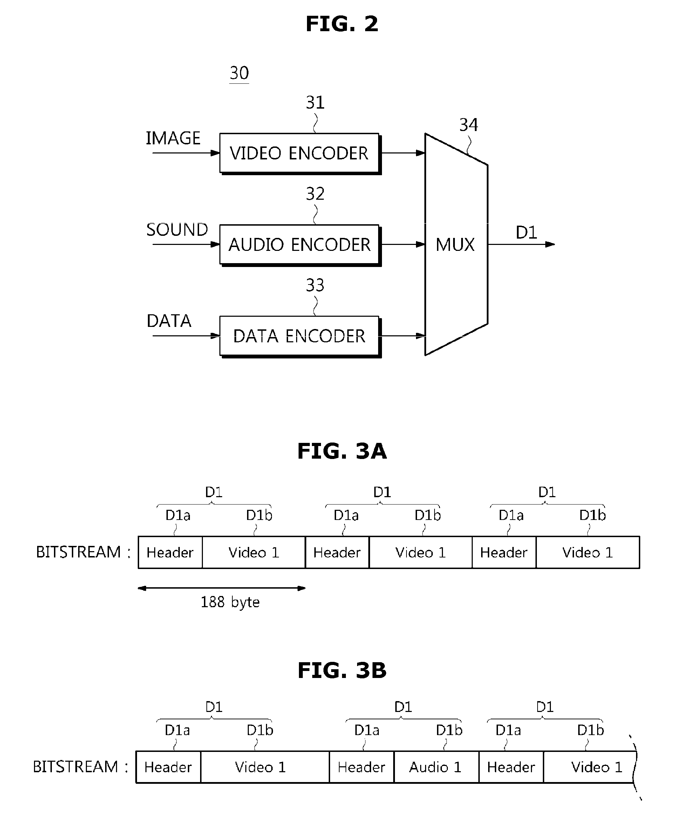

The encoder 30 described above, as shown in FIG. 2, includes a video encoder 31, an audio encoder 32, a data encoder 33, and a multiplexer 34.

The video encoder 31 encodes the image data received from the content source 20 using an image codec and packetizes the encoded image data. For example, the video encoder 31 may encode image data by using a Moving Picture Experts Group 2 (MPEG2) and may packetize the image data encoded using MPEG2 into an image packet.

The image data encoded by the video encoder 31 may include image information. On the other hand, the image packet may further include a header including information related to the encoded image data, in addition to the encoded image data.

Also, the video encoder 31 outputs the image packet described above to the multiplexer 34.

The audio encoder 32 encodes the acoustic data received from the content source 20 using an acoustic codec and packetizes the encoded acoustic data. For example, the audio encoder 32 may encode the acoustic data by using an Audio Coding-3 (AC-3) and may packetize the acoustic data encoded using AC-3 into an acoustic packet.

The acoustic data encoded by the audio encoder 32 may include acoustic information. On the other hand, the audio packet may further include a header including information related to the encoded acoustic data, in addition to the encoded acoustic data.

Also, the audio encoder 32 outputs the acoustic packet described above to the multiplexer 34.

The data encoder 33 packetizes data related to content into a data packet. The data packet may further include a header including information related to the content-related data, in addition to the content-related data.

The multiplexer 34 multiplexes the image packet, the acoustic packet, and the data packet and outputs the transmission data packet D1. Here, the transmission data packet D1 is output as a bitstream format. Hereafter, the transmission data packet D1 having the bitstream format will be referred to as a "transmission data stream."

The multiplexer 34 appropriately arranges the image packet, acoustic packet, and data packet and adds the header including information related to each of the packets, thereby generating the transmission data packet D1.

The transmission data packet D1 generated by the multiplexer 34 may be formed in various formats.

For example, the transmission data packet D1 may be formed of any one of Transport Stream (TS), Generic Stream Encapsulation (GSE), Generic Continuous Stream (GCS), and Generic Fixed Packetized Stream (GFPS).

A TS packet D1 has a predetermined size of 188 bytes as shown in FIG. 3A. The TS packet includes a TS header D1a of 4 bytes and a TS data field D1b of 184 bytes. The TS data field D1b may be filled with one of the image packet, the acoustic packet, and the data packet.

Also, the TS header D1a may include identification information for identifying the TS packet D1 and synchronization information indicating an initial point of the TS packet D1.

A GSE packet D1, as shown in FIG. 3B, includes a GSE header D1a and a GSE data field D1b. The GSE data field D1b may be filled with one of the image packet, the acoustic packet, and the data packet.

However, the GSE packet D1, different from the TS packet D1, varies in a packet length. In other words, the GSE packet D1 does not have a predetermined size and may be formed in various sizes.

As described above, the encoder 30 converts the image data, acoustic data, and content-related data into one of the TS packet, GSE packet, GCS packet, and GFPS packet and outputs the converted transmission data packet D1 as a stream format.

In other words, the encoder 30 outputs a transmission data stream in which a plurality of transmission data packets D1 are sequentially placed.

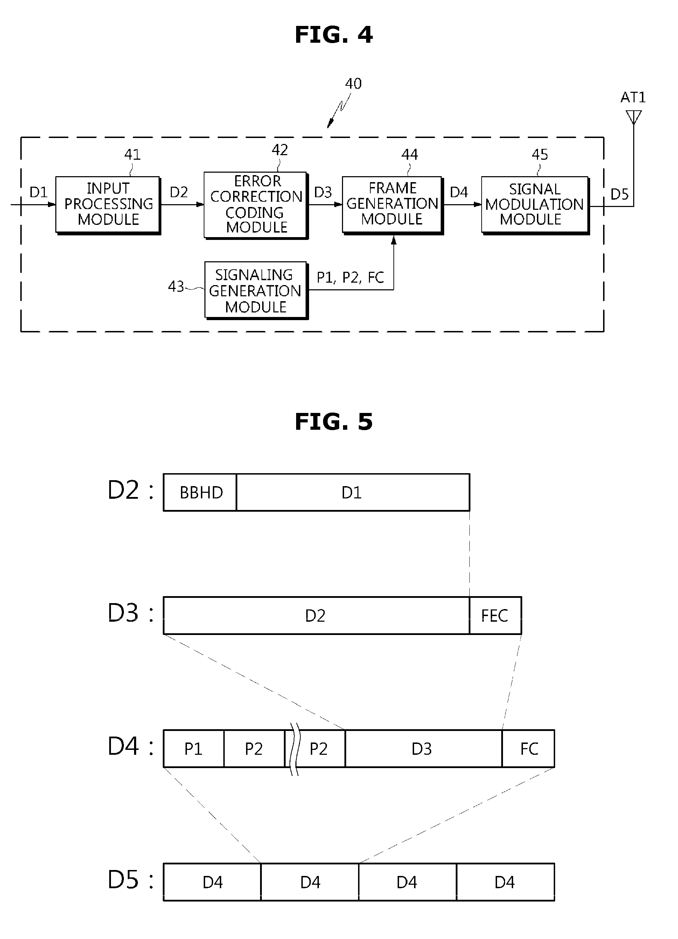

The transmitter 40 receives the transmission data packet D1 from the encoder 30, modulates the received transmission data packet D1 into a transmission signal, and transmits the transmission signal via an antenna AT1, as depicted in FIG. 4. The transmitter 40 may add an error correction code for correcting an error to the transmission data packet D1 and may modulate the transmission data packet D1 to transmit the transmission data packet D1 added with the error correction code through radio waves or light.

The transmitter 40, as shown in FIG. 4, includes an input processing module 41, an error correction coding module 42, a signaling generation module 43, a frame generation module 44, and a signal modulation module 45.

The input processing module 41 receives the transmission data stream output by the encoder 30 and outputs a base band frame D2.

In detail, the input processing module 41 may restore the transmission data packet D1 by slicing the transmission data stream.

Also, the input processing module 41 may generate a base band frame (BBFRAME) D2 by adding a base band header BBHD for identifying the transmission data packet D1, to the transmission data packet D1.

Herein, the base band frame D2, as shown in FIG. 5, includes the base band header BBHD and the transmission data packet D1.

The base band header BBHD includes information which relates to a type of the transmission data packet D1 and a processing mode of the transmission data packet D1. In other words, the base band header BBHD includes identification information for identifying he transmission data packet D1 as one of the TS packet, GSE packet, GCS packet, and GFPS packet.

The signal receiving apparatus 100, that will be described below in greater detail, may identify a format of the transmission data packet D1 by referring to the base band header BBHD.

Also, the base band header BBHD, selectively, may include an error correction code for protecting the transmission data packet D1. For example, the base band header BBHD may include a cyclical redundancy check (CRC) code.

Also, the input processing module 41 may further perform a base band scramble for encrypting the base band frame D2. In other words, when "o" is consecutively shown more than a reference number of times in the base band frame D2, the input processing module 41 may convert it into a specific code.

The error correction coding module 42 generates and outputs a forward error correction frame (FECFRAME) D3 based on the base band frame D2. In detail, the error correction coding module 42 generates a forward error correction code (FEC) based on the base band frame D2 and generates the forward error correction frame D3 by adding the forward error correction code FEC to the base band frame D2.

As a result, the error correction frame D3, as shown in FIG. 5, includes the base band frame D2 and the forward error correction code FEC.

Also, the error correction coding module 42 may perform bit-interleaving on the error correction frame D3. In other words, the error correction coding module 42 may rearrange respective bits included in the forward error correction frame D3.

The signaling generation module 43 generates and outputs a P1 signaling symbol P1, a P2 signaling symbol P2, and a frame close symbol FC.

The P1 signaling symbol P1 may indicate a transmission type, the P2 signaling symbol P2 may indicate a type of the transmission data packet D1, and the frame close symbol FC may indicate a close of a data frame D4 that will be described below.

Particularly, the P2 signaling symbol P2 indicates whether the transmission data packet D1 is a TS packet or another different data packet.

Also, the signaling generation module 43 may perform bit-interleaving on each of the P1 signaling symbol P1, the P2 signaling symbol P2, and the frame close symbol FC. In other words, the signaling generation module 43 may rearrange bits included in each of the P1 signaling symbol P1, the P2 signaling symbol P2, and the frame close symbol FC.

The frame generation module 44 generates and outputs the data frame D4 based on the error correction frame D3, P1 signaling symbol P1, the P2 signaling symbol P2, and the frame close symbol FC.

In detail, the frame generation module 44 generates the data frame D4, as shown in FIG. 5, by adding the P1 signaling symbol P1, the P2 signaling symbol P2, and the frame close symbol FC to the error correction frame D3.

The signal modulation module 45 generates a super frame D5 by consecutively combining a plurality of data frames D4 as shown in FIG. 5. Also, the signal modulation module 45 generates a transmission signal by modulating the super frame D5 and forwards the transmission signal via the antenna AT1. In other words, the signal modulation module 45 forwards the super frame D5 through radio waves, light, etc.

For example, the signal modulation module 45 may modulate the super frame D5 by using one of Orthogonal Frequency Division Multiplexing (OFDM), Quadrature Phase Shift Keying (QPSK), Quadrature Amplitude Modulation (QAM), and Vestigial Side Band (VSB).

As described above, the transmitter 40 generates the super frame D5 by adding various pieces of information to the transmission data packet D1 and modulates and transmits the super frame D5. Herein, the transmitted super frame D5 may include the transmission data packet D1, information for restoring the transmission data packet D1, and information on the transmission data packet D1 such as a type of the transmission data packet D1.

Accordingly, the signal transmitting apparatus 10 which modulates and transmits the transmission data packet D1 having various formats such as the TS packet, GSE packet, GCS packet, and GFPS packet has been described.

However, the signal transmitting apparatus 10 described above is merely an example of a signal transmitting apparatus which transmits signals to the signal receiving apparatus 100, and is not limited thereto.

Hereinafter, the signal receiving apparatus 100 will be described in greater detail.

The signal receiving apparatus 100 may receive broadcasting signals transmitted by the signal transmitting apparatus 10 and may restore image data and acoustic data from the received broadcasting signals.

The signal receiving apparatus 100 described above may be formed of various platforms such as a display device which plays back content restored from broadcasting signals, a relay apparatus which transmits the content restored from the broadcasting signals, and a gateway which retransmits the received broadcasting signals.

However, for better understanding, hereafter, the signal receiving apparatus 100 would be assumed as a display device capable of receiving broadcasting signals and playing content restored from the received broadcasting signals.

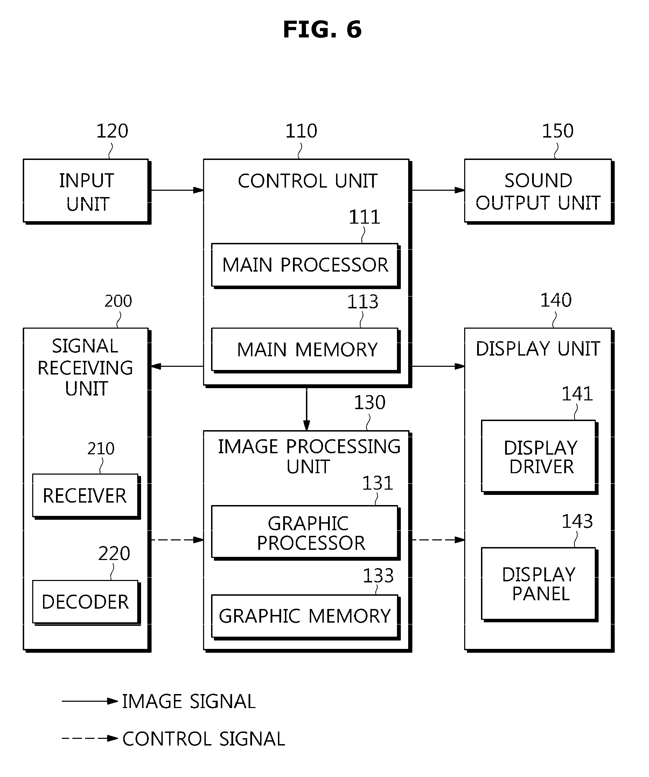

FIG. 6 is a configuration view of the signal receiving apparatus 100, according to an exemplary embodiment.

Referring to FIG. 6, the signal receiving apparatus 100 includes an input unit 120 which receives a user control command from a user, a signal receiving unit 200 which receives broadcasting signals from the signal transmitting apparatus 10, an image processing unit 130 which processes image data included in the received signals, a display unit 140 which displays processed images, a sound output unit 150 which outputs sounds included in received content, and a control unit 110 which controls the whole operations of the signal receiving apparatus 100.

The input unit 120 may include a plurality of buttons which receive various user control commands from the user. For example, the input unit 120 may include a volume button which controls a volume level of sound output by the sound output unit 150, and a power button which turns on or off the power of the signal receiving apparatus 100.

The signal receiving unit 200 receives broadcasting signals transmitted by the signal transmitting apparatus 10 and restores image data, acoustic data, and content-related data from the received broadcasting signals.

A detailed configuration and operation of the signal receiving unit 200 will be described later.

The image processing unit 130 processes the image data restored by the signal receiving unit 200 and provides the display unit 140 with the processed image data.

The image processing unit 130 may include a graphic processor 131 and a graphic memory 133.

The graphic memory 133 may temporarily store an image processing program for processing images, image processing data, and image data processed by the graphic processor 131 or restored by the signal receiving unit 200.

The graphic processor 131 may process image data according to the image processing program stored in the graphic memory 133, and may provide the display unit 140 with the processed image data.

The display unit 140 may include a display panel 143, which visually displays images, and a display driver 141, which drives the display panel 143.

The display panel 143 outputs images according to image data received from the display driver 141.

The display panel 143 may include a plurality of pixels which become a unit for displaying images. Each of the pixels may receive electric signals which display image data and may output optical signals corresponding to the received electric signals.

The display panel 143 described above may include a cathode ray tube (CRT), a display, a liquid crystal display (LCD) panel, a light emitting diode (LED) panel, an organic light emitting diode (OLED), a plasma display panel (PDP), and a field emission display (FED) panel. However, the display panel 143 is not limited thereto but may include various display devices capable of visually displaying images corresponding to image data.

The display driver 141 receives image data from the image processing unit 130, according to a control signal of the control unit 110, and drives the display panel 143 to display images corresponding to the received image data. In detail, the display driver 141 transmits electric signals corresponding to image data to each of the plurality of pixels forming the display panel 143.

The sound output unit 150 may output sounds corresponding acoustic data, among content received by the signal receiving unit 200, according to a control signal of the control unit 110. The sound output unit 150 may include one or more speakers which convert electric signals into acoustic signals.

The control unit 110 controls the whole operation of the signal receiving apparatus 100, and may include a main processor 111 and a main memory 113.

The main memory 113 may store a control program and control data for controlling the operation of the signal receiving apparatus 100 and may temporarily store one of a user control command received via the input unit 120 and a control signal output by the main processor 111.

The main processor 111 may process various types of data stored in the main memory 113 according to the control program stored in the main memory 113.

For example, the main processor 111 may generate a channel selection signal for selecting a channel via which the signal receiving unit 200 receives broadcasting signals according to the user control command input, through the input unit 120, or may generate a volume control signal for controlling a volume level output by the sound output unit 150.

As described above, the control unit 110, which includes the main processor 111 and the main memory 113, may control operations of various components included in the signal receiving apparatus 100 according to a control command of the user.

Hereinafter, a configuration of the signal receiving unit 200 will be described in greater detail.

The configuration of the signal receiving apparatus 100 described herein is merely an example of a receiving unit which restores digital broadcasting content from transmission signals and is not limited thereto.

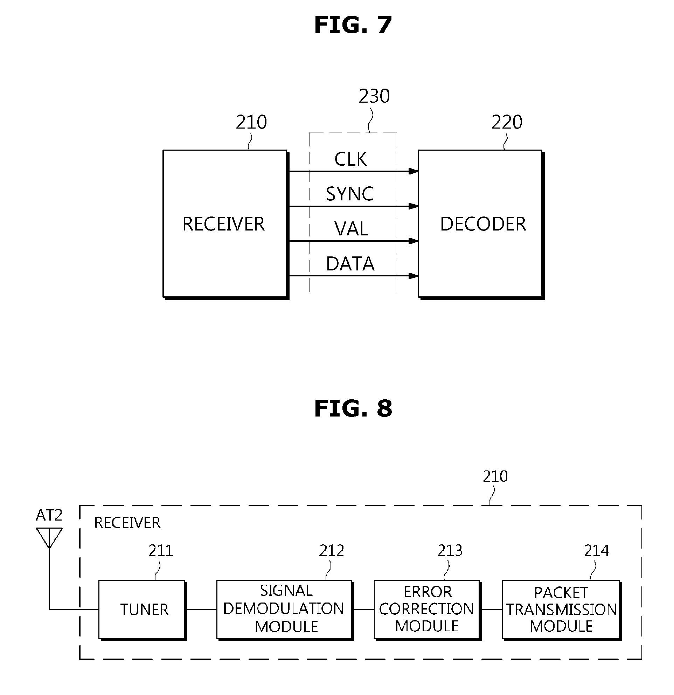

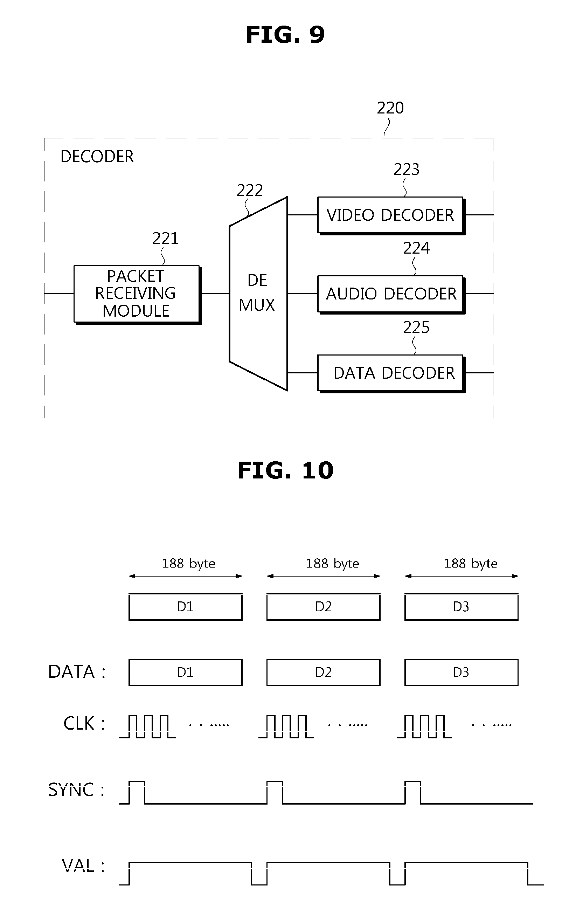

FIG. 7 is a view illustrating an example of the signal receiving unit 200 included in the signal receiving apparatus 100. FIG. 8 is a configuration view of a receiver 210 included in the signal receiving apparatus 100. FIG. 9 is a configuration view of a decoder 220 included in the signal receiving apparatus 100.

Referring to FIGS. 7 to 9, the signal receiving unit 200 includes the receiver 210 which receives a transmission signal via an antenna AT2, as depicted in FIG. 8, and demodulates the received transmission signal, the decoder 220 which receives a transmission data packet from the receiver 210 and restores image data, acoustic data, and content-related data from the received data packet, and an interface 230 via which data transmitting and receiving between the receiver 210 and the decoder 220 is performed.

The interface 230, as shown in FIG. 7, is provided between the receiver 210 and the decoder 220 and transmits the transmission data packet D1 output by the receiver 210 to the decoder 220.

Also, the interface 230 may include a clock line CLK, a synchronization line SYNC, a transmission notification line VAL, and a data line DATA.

The clock line CLK transmits a clock signal for synchronizing a transmission clock of the receiver 210 with a receiving clock of the decoder 220.

Due to the clock signal of the clock line CLK, the timing of transmitting the transmission data packet D1 by the receiver 210 may be identical to the timing of receiving the transmission data packet D1 by the decoder 220.

The synchronization line SYNC transmits a synchronization signal which indicates a point in time of beginning the transmission of the transmission data packet D1 by the receiver 210 to the decoder 220.

In detail, the receiver 210 outputs the synchronization signal together with a first bit of the transmission data packet D1. The decoder 220 may recognize a beginning of the transmission of the transmission data packet D1 based on the synchronization signal of the synchronization line SYNC.

The transmission notification line VAL transmits a transmission notification signal which indicates that data is transmitted through the data line DATA to the decoder 220.

In detail, the receiver 210 outputs the transmission notification signal through the transmission notification line VAL while transmitting the transmission data packet D1. While the transmission notification signal is being received through the transmission notification line VAL, the decoder 220 may recognize that transmission data is transmitted through the data line DATA.

The data line DATA may transmit the transmission data packet D1 from the receiver 210 to the decoder 220.

The data line DATA may include one or more signal transmission lines. In detail, when the data line DATA includes one signal transmission line, the receiver 210 may transmit the transmission data packet D1 in series through a single signal transmission line. Also, when the data line DATA includes two or more signal transmission lines, the receiver 210 may transmit the transmission data packet D1 in parallel, through a plurality of signal transmission lines.

The receiver 210, as shown in FIG. 8, may include a tuner 211, a signal demodulation module 212, an error correction module 213, a packet transmission module 214, a receiving memory 215, and a receiving controller 216.

The tuner 211 extracts a transmission signal of a particular frequency (channel) from various signals received via the antenna AT2. In other words, the tuner 211 may extract a transmission signal transmitted by the signal transmitting apparatus 10, from amongst various signals.

The signal demodulation module 212 may receive the transmission signal from the tuner 211 and output an error correction frame D3.

The signal demodulation module 212 may demodulate a data frame D4 from the transmission signal by using one of OFDM, QPSK, QAM, and VSB.

After that, the signal demodulation module 212 performs de-interleaving on the data frame D4. In detail, bits of the data frame D4 which are rearranged by interleaving are arranged in an original sequence.

The signal demodulation module 212 extracts the error correction frame D3 from the data frame D4 and outputs the extracted error correction frame D3.

The error correction module 213 performs a forward error correction on the error correction frame D3. In detail, the error correction module 213 may perform a forward error correction on a base band frame D2, based on an error correction code FEC.

Also, the error correction module 213 outputs the base band frame D2, on which the error correction is performed.

The packet transmission module 214 receives the base band frame D2 and outputs the transmission data packet D1.

Herein, the packet transmission module 214 restores the transmission data packet D1, from the base band frame D2, and determines a type of the transmission data packet D1. Also, the packet transmission module 214 divides the transmission data packet D1, depending the type of the transmission data packet D1, and transmits transmission data formed of the divided transmission data packet D1.

For example, the packet transmission module 214 may determine the type of the transmission data packet D1 included in the base band frame D2 based on a base band header BBHD included in the base band frame D2.

As described above, the base band header BBHD includes information on the type of the transmission data packet D1, included in the base band frame D2. Accordingly, based on the base band header BBHD, the packet transmission module 214 may determine whether the transmission data packet D1 is a TS packet or not.

According to another exemplary embodiment, the packet transmission module 214 may determine the type of the transmission data packet D1 based on a P2 signaling symbol P2 included in the data frame D4.

As described above, the P2 signaling symbol P2 indicates whether the transmission data packet D1 is the TS packet or a different data packet. Accordingly, based on the P2 signaling symbol P2, the packet transmission module 214 may determine whether the transmission data packet D1 is the TS packet or not.

According to another exemplary embodiment, the packet transmission module 214 may determine whether the transmission data packet D1 is the TS packet or not, depending on a signal received from the decoder 220, which will be described below in greater detail.

The packet transmission module 214 transmits transmission data to the decoder 220 while assuming the transmission data packet D1 as the TS packet. After that, when the decoder 220 fails to restore image data, acoustic data, and content-related data based on transmission data, the decoder 220 may output a packet error signal to the receiver 210 and the receiver 210 may determine whether the transmission data packet D1 is the TS packet or not.

When the transmission data packet D1 is determined to be the TS packet, the packet transmission module 214 transmits the transmission data packet D1, as it is, to the decoder 220.

In detail, the packet transmission module 214 may transmit the transmission data packet D1 through the data line DATA of the interface 230 while being synchronized with the clock signal transmitted through the clock line CLK of the interface 230.

Also, when the transmission data packet D1 is not the TS packet, the packet transmission module 214 may divide the transmission data packet D1 into pieces he size of a TS packet and transmits the divided transmission data packet D1 to the decoder 220.

In detail, the packet transmission module 214 may divide the transmission data packet D1 into pieces of a 188 byte size corresponding to a format of the TS packet and may transmit the divided transmission data through the data line DATA of the interface 230.

Particularly, the packet transmission module 214 may output the synchronization signal through the synchronization line SYNC at a point in time of beginning the transmission of the transmission data packet D1. In other words, the packet transmission module 214 may output the synchronization signal together with a first bit of first transmission data.

Also, the packet transmission module 214 may output the transmission notification signal through the transmission notification line VAL while transmitting the transmission data.

The division and transmission of the transmission data packet D1 will be described below in greater detail.

As described above, the receiver 210 restores the transmission data packet D1 from the transmission signal received via the antenna AT2, converts the format of the transmission data packet D1 according to the type of the transmission data packet D1, and transmits the transmission data packet D1 with the converted format to the decoder 220.

The decoder 220, as shown in FIG. 9, may include a packet receiving module 221, a de-multiplexer 222, a video decoder 223, an audio decoder 224, and a data decoder 225.

The packet receiving module 221 receives transmission data from the receiver 210 and restores the transmission data packet D1 from the received transmission data.

In detail, the packet receiving module 221 may receive the transmission data packet D1 through the data line DATA of the interface 230 while being synchronized with the clock signal received through the clock line CLK of the interface 230.

Particularly, the packet receiving module 221 may recognize the start of receiving the transmission data packet D1 via the synchronization signal received through the synchronization line SYNC.

Also, based on the transmission notification signal received through the transmission notification line VAL, it may be determined whether data of the data line DATA is valid or not. In other words, the packet receiving module 221 may determine a data packet received through the data line DATA to be the transmission data packet D1 while the transmission notification signal is being received.

Also, the packet receiving module 221 may restore the transmission data packet D1 from the data packet using the synchronization signal.

As described above, the packet transmission module 214 of the receiver 210 outputs the synchronization signal together with the first bit of the transmission data packet D1.

As a result, the packet receiving module 221 may recognize a beginning and an end of the transmission data packet D1 based on the synchronization signal. In other words, the packet receiving module 221 may restore the transmission data packet D1 by combining the synchronization signals with transmission data received between the synchronization signals.

Receiving of the transmission data and restoring of the transmission data packet D1 will be described below in detail.

Also, the packet receiving module 221 outputs the restored transmission data packet D1 to the de-multiplexer 222.

The de-multiplexer 222 de-multiplexes the transmission data packet D1 and outputs an image packet, an acoustic packet, and a data packet. In detail, the de-multiplexer 222 extracts the image packet, the acoustic packet, and the data packet from the transmission data packet D1 and outputs the image packet, the acoustic packet, and the data packet to the video decoder 223, the audio decoder 224, and the data decoder 225, respectively.

The video decoder 223 receives the image packet from the de-multiplexer 222 and outputs decoded image data.

In detail, the video decoder 223 de-packetizes the image packet referring to header information included in the image packet and decodes the de-packetized image data using an image codec. For example, the video decoder 223 may decode the image data using MPEG2.

Also, the video decoder 223 outputs the decoded image data.

The audio decoder 224 receives the acoustic packet from the de-multiplexer 222 and outputs decoded acoustic data.

In detail, the audio decoder 224 de-packetizes the acoustic packet referring to header information included in the acoustic packet and decodes the de-packetized acoustic data using an acoustic codec. For example, the audio decoder 224 may decode the acoustic data using AC-3.

Also, the audio decoder 224 outputs the decoded acoustic data.

The data decoder 225 receives the data packet from the de-multiplexer 222 and outputs content-related data. In detail, the data decoder 225 de-packetizes the data packet referring to header information included in the data packet and decodes the content-related data.

Also, the data decoder 225 outputs the content-related data.

As described above, the decoder 220 receives the transmission data from the receiver 210, through the interface 230, and restores and outputs the image data, the acoustic data, and the content-related data from the transmission data.

Hereinafter, a process in which the receiver 210 generates the transmission data by dividing the transmission data packet D1 and a process in which the decoder 220 restores the transmission data packet D1 by combining the transmission data will be described.

First, a process in which the receiver 210 transmits a TS packet and the decoder 220 receives the TS packet will be described.

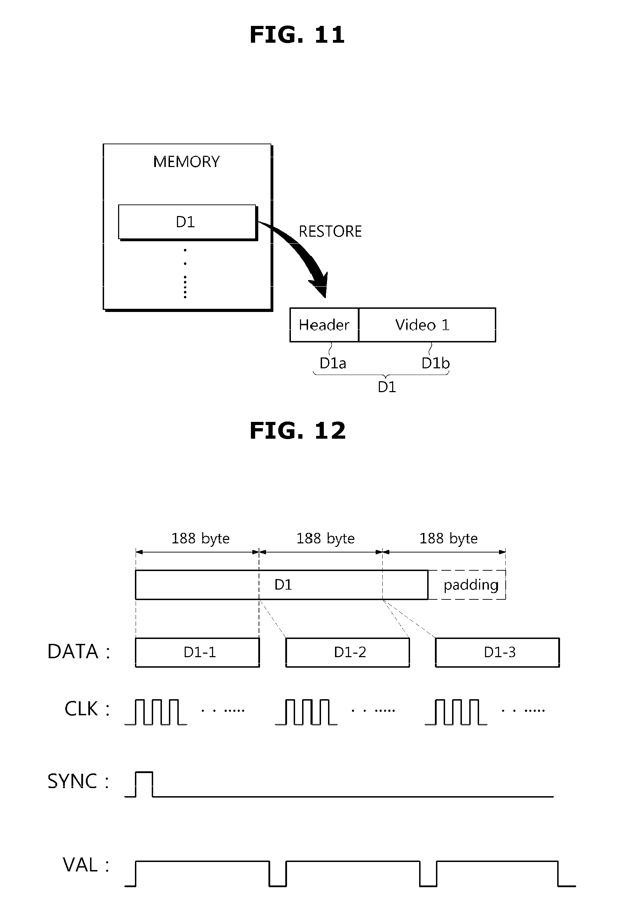

FIG. 10 illustrates an example in which the receiver 210, included in the signal receiving apparatus 100, transmits the transmission data packet D1, according to an exemplary embodiment. FIG. 11 is a view illustrating an example in which the decoder 220, included in the signal receiving apparatus 100, restores the received transmission data packet D1, according to an exemplary embodiment.

When the demodulated transmission data packet D1 is the TS packet, the transmission data packet D1, as shown in FIG. 10, has a size of 188 bytes. Herein, it may be determined based on one of the P2 signaling symbol P2 of the data frame D4 and the base band header BBHD of the base band frame D2, whether the transmission data packet D1 is the TS packet or not.

The receiver 210, as shown in FIG. 10, transmits the transmission data packet D1 of 188 bytes through the data line DATA. In other words, the receiver 210 sequentially transmits the transmission data packet D1 through the interface 230, while the transmission data packet D1 is not being divided.

Also, the receiver 210, as shown in FIG. 10, may output the clock signal through the clock line CLK and may output the synchronization signal through the synchronization line SYNC whenever transmitting a new transmission data packet D1. In other words, the receiver 210 may output the synchronization signal when beginning the transmission of a first transmission data packet D1. After transmitting all the 188 bytes of the first transmission data packet D1, the receiver 210 may output the synchronization signal again when beginning the transmission of a second transmission data packet D1.

Also, as shown in FIG. 10, the receiver 210 outputs the transmission notification signal through the transmission notification line VAL while transmitting the transmission data packet D1.

While the transmission notification signal of the transmission notification line VAL is being received, the decoder 220 receives the transmission data packet D1 through the data line DATA and sequentially stores the received transmission data packet D1 in a memory as shown in FIG. 11.

Herein, the decoder 220 may recognize a beginning point of the transmission data packet D1 based on the synchronization signal of the synchronization line SYNC.

The decoder 220 which receives the transmission data packet D1 may de-multiplex the transmission data packet D1 and may extract the image packet, acoustic packet, and the data packet.

As described above, when the transmission data packet D1 is the TS packet, the receiver 210 transmits the transmission data packet D1, as it is, to the decoder 220, and the decoder 220 de-multiplexes and decodes the received transmission data packet D1, as it is.

Next, a process in which the receiver 210 transmits a GSE packet, a GCS packet, and a GFPS packet and the decoder 220 receives the GSE packet, the GCS packet, and the GFPS packet will be described.

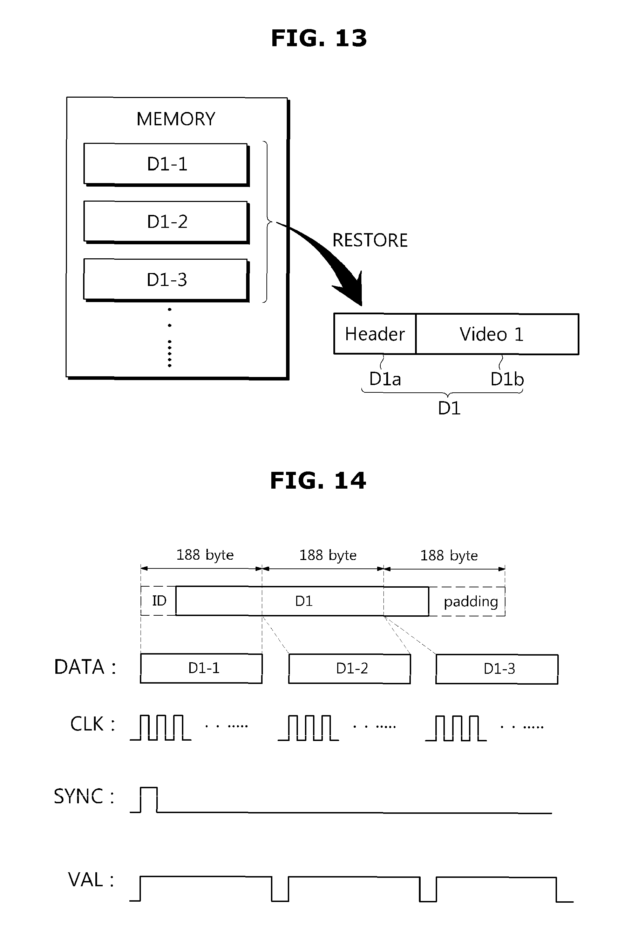

FIG. 12 illustrates another example in which the receiver 210, included in the signal receiving apparatus 100, transmits the transmission data packet D1, according to an exemplary embodiment. FIG. 13 is a view illustrating another example in which the decoder 220, included in the signal receiving apparatus 100, restores the received transmission data packet D1, according to an exemplary embodiment.

When the restored transmission data packet D1 is not the TS packet, the transmission data packet D1, as shown in FIG. 12, may have a variable length. Herein, it may be determined based on one of the P2 signaling symbol P2 of the data frame D4 and the base band header BBHD of the base band frame D2 whether the transmission data packet D1 is the TS packet or not.

The receiver 210, as shown in FIG. 12, divides the transmission data packet D1 into pieces of predetermined size.

For example, the receiver 210 may generate first transmission data D1-1 of 188 bytes and second transmission data D1-2 of 188 bytes by dividing the transmission data packet D1. When residual data left after generating the first transmission data D1-1 and the second transmission data D1-2 is less than 188 bytes, the receiver 210 may generate third transmission data D1-3 of 188 bytes by adding a padding code to the residual data. Herein, the padding code may be a random code.

As described above, the receiver 210 may generate the transmission data D1-1, D1-2, and D1-3 of 188 bytes, which is the predetermined size, from the transmission data packet D1.

When the transmission data packet D1 is less than 188 bytes, the receiver 210 may generate only the first transmission data D1-1 by adding the padding code to the transmission data packet D1, according to an exemplary embodiment.

The receiver 210, as shown in FIG. 12, sequentially transmits the transmission data D1-1, D1-2, and D1-3 of 188 bytes through the data line DATA.

Also, the receiver 210, as shown in FIG. 12, may output the clock signal through the clock line CLK and as shown in FIG. 12, may output the synchronization signal through the synchronization line SYNC whenever transmitting a new transmission data packet D1.

The receiver 210 may output the synchronization signal when beginning the transmission of the first transmission data D1-1 of the transmission data packet D1. In other words, the receiver 210 does not output the synchronization signal when beginning the transmission of other transmission data such as the second transmission data D1-2.

When one transmission data packet D1 is all transmitted and then a next transmission data packet D1 is transmitted, the receiver 210 outputs the synchronization signal when beginning the transmission of the first transmission data D1-1 of the next transmission data packet D1.

Also, as shown in FIG. 12, the receiver 210 outputs the transmission notification signal through the transmission notification line VAL while transmitting the transmission data D1-1, D1-2, and D1-3.

Unlike the synchronization signal, the transmission notification signal is always transmitted while the transmission data D1-1, D1-2, and D1-3 are being output.

While the transmission notification signal of the transmission notification line VAL is being received, the decoder 220 receives the transmission data D1-1, D1-2, and D1-3 through the data line DATA and sequentially stores the received transmission data D1-1, D1-2, and D1-3 in a memory as shown in FIG. 13.

Also, the decoder 220 may restore the transmission data packet D1 by combining the transmission data D1-1, D1-2, and D1-3.

In detail, the decoder 220 may recognize a beginning point of the transmission data packet D1 based on the synchronization signal of the synchronization line SYNC. In other words, the decoder 220 may determine the transmission data received together with the synchronization signal to be the first transmission data D1-1.

Also, the decoder 220 may determine the transmission data D1-1, D1-2, and D1-3 received after receiving the synchronization signal and before receiving a next synchronization signal as forming one transmission data packet D1.

For example, when the first transmission data D1-1 is received together with the synchronization signal, the second transmission data D1-2 and the third transmission data D1-3 are received, and a next synchronization signal is received, the decoder 220 may determine the first, second, and third transmission data D1-1, D1-2, and D1-3 as forming one transmission data packet D1.

Accordingly, the decoder 220 may restore the transmission data packet D1 by combining the transmission data D1-1, D1-2, and D1-3, received after receiving the synchronization signal and before receiving the next synchronization signal. In detail, the decoder 220 may restore the transmission data packet D1 by consecutively combining the transmission data D1-1, D1-2, and D1-3, received between the synchronization signals and removing the padding code.

Herein, the decoder 220 determines the size of the transmission data packet D1, based on the header D1a included in the transmission data packet D1, and removes a code added in addition to the size of the transmission data packet D1, to remove the padding code.

The decoder 220 which restores the transmission data packet D1 may de-multiplex the transmission data packet D1 and may extract the image packet, acoustic packet, and the data packet.

As described above, when the transmission data packet D1 is not the TS packet, the receiver 210 divides and transmits the transmission data packet D1 to the decoder 220 and the decoder 220 combines and restores the divided transmission data packet D1. Also, the decoder 220 de-multiplexes and decodes the restored transmission data packet D1.

Next, a process in which the receiver 210 transmits packets having various formats and the decoder 220 receives the packets having various formats will be described.

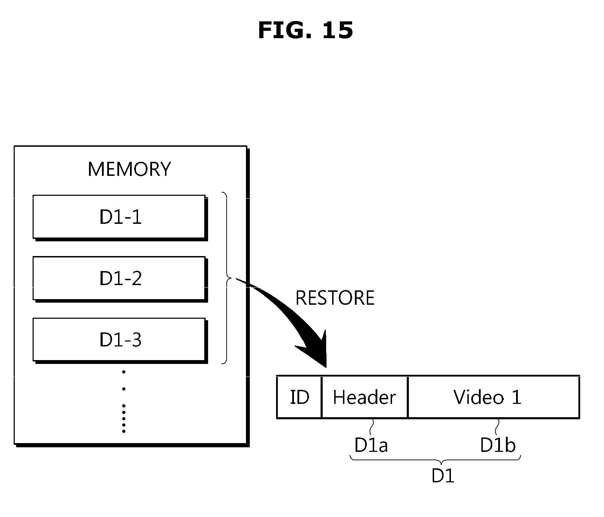

FIG. 14 is a view illustrating another example in which the receiver 210 included in the signal receiving apparatus 100 transmits the transmission data packet D1, according to an exemplary embodiment. FIG. 15 is a view illustrating another example in which the decoder 220 included in the signal receiving apparatus 100 restores the received transmission data packet D1, according to an exemplary embodiment.

A plurality of encoders 30 may generate a plurality of transmission data packets D1 having mutually different formats and the transmitter 40 may transmit one transmission signal by combining the transmission data packets D1 having mutually different formats. For example, after receiving a TS packet from a first encoder and receiving a GSE packet from a second encoder, the transmitter 40 may generate a transmission signal by combining and modulating the TS packet and the GSE packet.

Also, when the transmission data packets D1 having mutually different formats are received, the receiver 210 restores the transmission data packets D1 having various formats such as the TS packet, GSE packet, and GFPS packet by modulating the transmission signal.

Herein, to decode the image data and acoustic data, the receiver 210 transmits format information ID of the transmission data packet D1 together with the transmission data packet D1 to the decoder 220.

In detail, the receiver 210, as shown in FIG. 14, adds format information ID to the transmission data packet D1 received from the receiver 210. Herein, the format of the transmission data packet D1 may be determined based on one of the P2 signaling symbol P2 of the data frame D4 and the base band header BBHD of the base band frame D2.

After that, the receiver 210 divides the transmission data packet D1 into pieces of predetermined size.

For example, the receiver 210 may generate first transmission data D1-1 of 188 bytes and second transmission data D1-2 of 188 bytes by dividing the transmission data packet D1. When residual data left after generating the first transmission data D1-1 and the second transmission data D1-2 is less than 188 bytes, the receiver 210 may generate third transmission data D1-3 of 188 bytes, by adding a padding code to the residual data.

As described above, the receiver 210 may generate the transmission data D1-1, D1-2, and D1-3 of 188 bytes, which is the predetermined size, from the transmission data packet D1 added with the format information ID.

When the transmission data packet D1 added with the format information ID is less than 188 bytes, the receiver 210 may generate only the first transmission data D1-1 by adding the padding code to the transmission data packet D1.

After that, the receiver 210, as shown in FIG. 14, sequentially transmits the transmission data D1-1, D1-2, and D1-3 of 188 bytes through the data line DATA.

Also, the receiver 210, as shown in FIG. 14, may output the clock signal through the clock line CLK and as shown in FIG. 14, may output the synchronization signal through the synchronization line SYNC whenever transmitting the transmission data packet D1 added with the format information ID. The receiver 210 may output the synchronization signal when beginning the transmission of the first transmission data D1-1 of the transmission data packet D1 added with the format information ID.

Also, as shown in FIG. 14, the receiver 210 outputs the transmission notification signal through the transmission notification line VAL while transmitting the transmission data D1-1, D1-2, and D1-3.

While the transmission notification signal of the transmission notification line VAL is being received, the decoder 220 receives the transmission data D1-1, D1-2, and D1-3 through the data line DATA and sequentially stores the received transmission data D1-1, D1-2, and D1-3 in a memory as shown in FIG. 15.

Also, the decoder 220 may restore the format information ID and the transmission data packet D1 by combining the transmission data D1-1, D1-2, and D1-3.

In detail, the decoder 220 may recognize beginning points of the format information ID and the transmission data packet D1 based on the synchronization signal of the synchronization line SYNC. In other words, the decoder 220 may determine the transmission data received together with the synchronization signal to be the first transmission data D1-1.

Accordingly, the decoder 220 may restore the format information ID and the transmission data packet D1 by combining the transmission data D1-1, D1-2, and D1-3 received after receiving the synchronization signal and before receiving a next synchronization signal. In detail, the decoder 220 may restore the format information ID and the transmission data packet D1 by consecutively combining the transmission data D1-1, D1-2, and D1-3 received between the synchronization signals and removing the padding code.

The decoder 220 may determine the format of the transmission data packet D1 from the format information ID, may de-multiplex the transmission data packet D1, and may extract the image packet, acoustic packet, and data packet.

As described above, when the transmission data packets D1 having various formats are received, the receiver 210 transmits the transmission data packet D1 added with format information to the decoder 220 and the decoder 220 de-multiplexes and decodes the transmission data packet D1 based on the format information of the transmission data packet D1.

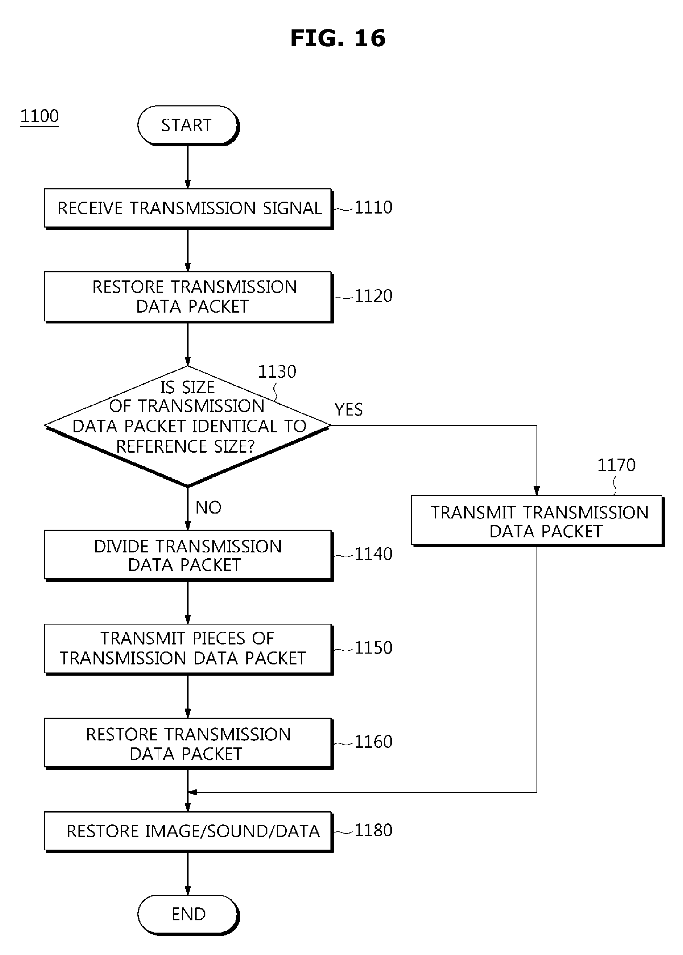

FIG. 16 is a view illustrating an example of operations 1100 of the receiver 210 and the decoder 220 included in the signal receiving apparatus 100, according to an exemplary embodiment.

Referring to FIG. 16, the operations 1100 of the receiver 210 and the decoder 220 will be described.

First, the receiver 210 receives a transmission signal (1110).

The signal transmitting apparatus 10 may generate a transmission data packet D1 by encoding image data, acoustic data, and content-related data. Also, the signal transmitting apparatus 10 may generate the transmission signal by demodulating the transmission data packet D1 and may transmit the generated transmission signal.

The receiver 210 may receive various signals using the antenna AT2 and may extract transmission signals with a particular frequency (channel), from the various signals, by using the tuner 211.

After that, the receiver 210 restores the transmission data packet D1 from the transmission signal (1120).

The receiver 210 may demodulate a data frame D4 from the transmission signal and may extract and output an error correction frame D3 from the data frame D4.

Also, the receiver 210 may perform a forward error correction on a base band frame D2 based on an error correction code FEC of the error correction frame D3 and may output the base band frame D2 corrected with errors.

Also, the receiver 210 may restore the transmission data packet D1 from the base band frame D2.

After that, the signal receiving apparatus 100 determines whether a size of the transmission data packet D1 is equal to a reference size (1130).

For example, the reference size may be 188 bytes and the receiver 210 may determine whether the transmission data packet D1 is a TS packet. In detail, the receiver 210 may determine whether the transmission data packet D1 is the TS packet, based on one of a base band header BBHD included in the base band frame D2 and a P2 signaling symbol P2 included in the data frame D4.

When the size of the transmission data packet D1 is the reference size (yes in 1130), the receiver 210 transmits the transmission data packet D1 to the decoder 220 (1170).

In detail, the receiver 210 transmits the transmission data packet D1 together with a synchronization signal which indicates a beginning of the transmission of transmission data and a transmission notification signal which indicates the transmission of the transmission data to the decoder 220 through the interface 230.

When the size of the transmission data packet D1 is not the reference size (no in 1130), the receiver 210 converts the transmission data packet D1 to the reference size (1140).

When the size of the transmission data packet D1 is larger than the reference size, the receiver 210 may divide the transmission data packet D1 into pieces of the reference size.

For example, the receiver may generate transmission data of 188 bytes by dividing the transmission data packet D1. Also, when a size of residual data left after generating the transmission data of 188 bytes is less than 188 bytes, the receiver 210 may additionally generate the transmission data of 188 bytes by adding a padding code to the residual data.

When the size of the transmission data packet D1 is smaller than the reference size, the receiver 210 may generate the transmission data of 188 bytes by adding the padding code to the transmission data packet D1.

After that, the receiver 210 transmits pieces of the transmission data packet D1 to the decoder 220 (1150).

In detail, the receiver 210 transmits pieces of the transmission data packet D1 together with the synchronization signal which indicates the beginning of the transmission of transmission data and the transmission notification signal which indicates the transmission of the transmission data to the decoder 220 through the interface 230.

After that, the decoder 220 which receives the divided transmission data packet D1 restores the transmission data packet D1 from the divided transmission data packet D1 (1160).

In detail, the decoder 220 restores the transmission data packet D1 by combining the pieces of the transmission data packet D1 according to a receiving sequence. To restore the transmission data packet D1, the decoder 220 may use the synchronization signal and the transmission notification signal.

After the transmission data packet D1 is received or restored, the decoder 220 restores image data, acoustic data, and content-related data from the transmission data packet D1 (1180).

In detail, the decoder 220 may de-multiplex the transmission data packet D1 and may output an image packet, an acoustic packet, and a data packet.

Also, the decoder 220 may restore the image data, the acoustic data, and the content-related data by decoding the image packet, the acoustic packet, and the data packet.

As described above, the receiver 210 which receives the transmission signal restores the transmission data packet D1 from the transmission signal, divides the transmission data packet D1 depending on the size of the transmission data packet D1, and transmits the transmission data packet D1 to the decoder 220. Also, the decoder 220 restores the transmission data packet D1 from the divided transmission data packet D1 and restores the image data, the acoustic data, and the content-related data by decoding the transmission data packet D1.

According to an exemplary embodiment, there is provided a signal receiving apparatus and a method of controlling the same, in which when a transmission data packet which is not a TS packet is received, the transmission data packet is transmitted while being divided, thereby transmitting transmission data packets having various formats between a receiver and a decoder.

Although a few embodiments of the invention have been shown and described, it would be appreciated by those skilled in the art that changes may be made in these embodiments without departing from the principles of the invention, the scope of which is defined in the claims.

## Claims

1. A signal receiving apparatus comprising:
a receiver configured to receive first and second format data;
a decoder configured to restore one of image data and acoustic data from the first and second format data; and
an interface configured to forward the first format data from the receiver to the decoder,
wherein the second format data is converted into the first format data when the second format data is transmitted from the receiver to the decoder.

2. The signal receiving apparatus of claim 1, wherein the decoder restores the second format data from the received data and restores one of the image data and acoustic data from the restored second format data.

3. The signal receiving apparatus of claim 2, wherein the receiver transmits a synchronization signal which indicates a beginning of the transmission of the data to the decoder through the interface.

4. The signal receiving apparatus of claim 3, wherein the decoder restores the second format data from data received between the synchronization signal and a following synchronization signal.

5. The signal receiving apparatus of any one of claims 2 to 4, wherein the receiver transmits a data transmission signal which indicates the transmission of the data to the decoder through the interface.

6. The signal receiving apparatus of claim 5, wherein the decoder restores the second format data from data received while the data transmission signal is being received.

7. The signal receiving apparatus of any one of claims 2 to 6, wherein the first format data has a predetermined size and the second format data has a variable size.

8. The signal receiving apparatus of claim 7, wherein the first format data has a size of 188 bytes.

9. The signal receiving apparatus of any one of the preceding claims, wherein the first format data is a transport stream (TS) packet and the second format data is at least one of a Generic Stream Encapsulation (GSE) packet, a Generic Continuous Stream (GCS) packet, and a Generic Fixed Packetized Stream (GFPS) packet.

10. A method of controlling a signal receiving apparatus comprising a receiver, a decoder, and an interface connecting the receiver with the decoder, the method comprising:
receiving, by the receiver, one of first format data and second format data;
converting, by the receiver, the second format data into the first format data when the second format data is received;
forwarding, through the interface, the first format data to the decoder; and
restoring, by the decoder, the second format data from the first format data.

11. The method of claim 10, further comprising restoring, by the decoder, one of image data and acoustic data from the second format data.

12. The method of claim 11, further comprising transmitting, by the receiver, a synchronization signal which indicates a beginning of the transmission of the data to the decoder through the interface.

13. The method of claim 12, wherein the restoring of the second format data comprises restoring the second format data based on data received between the synchronization signal and a following synchronization signal.

14. The method of any one of claims 11 to 13, further comprising transmitting, by the receiver, a data transmission signal which indicates the transmission of the data to the decoder through the interface.

15. The method of claim 14, wherein the restoring of the second format data comprises restoring the second format data based on data received while the data transmission signal is being received.
